# FASCICULE DE BREVET EUROPEEN

(11) **EP 4 101 768 B1**
(45) Date de publication et mention de la délivrance du brevet: **10.04.2024**
(21) Numéro de dépôt: 22178167.7
(22) Date de dépôt: 09.06.2022
(51) Int. Cl.: B64D 17/72, B64C 39/02

(54) **ENSEMBLE COMPORTANT UN BRAS ET UN DISPOSITIF DE COMMANDE DU BRAS**
ANORDNUNG MIT EINEM ARM UND EINER VORRICHTUNG ZUR STEUERUNG DES ARMS
ASSEMBLY COMPRISING AN ARM AND AN ARM CONTROL DEVICE

(30) Priorité: 10.06.2021 FR 2106123
(43) Date de publication de la demande: 14.12.2022
(73) Titulaire: Dronavia, 88200 Remiremont (FR)
(72) Inventeur: PELLETEY, Ludovic, 88120 BASSE SUR LE RUPT (FR); AMET, Florian, 88200 REMIREMONT (FR)
(74) Mandataire: Cabinet Bleger-Rhein-Poupon

(56) Documents cités:
- CN-A- 109 436 341
- CN-A- 111 232 222
- CN-U- 208 868 301
- IT-A1- PV20 130 003

## Description

L'invention a trait à un ensemble comportant un bras, destiné à percuter ou déplacer un élément, monté mobile en translation entre une ouverture d'entrée et une ouverture de sortie d'un passage traversant d'un corps, et un dispositif de commande dudit bras comportant un organe de retenue solidaire dudit corps et conçu apte à adopter une première position dans laquelle il agit sur ledit bras et le maintient dans une position inactive éloignée de l'ouverture de sortie et une seconde position dans laquelle il libère le bras.

De manière classique, de tels ensembles trouvent d'ores et déjà une application dans différents domaines, et sont entre autres couramment mis en oeuvre dans certains systèmes de déploiement de parachutes pour drones qui reposent sur le déclenchement d'une charge pyrotechnique, ou le percement d'une cartouche de gaz sous pression, comme décrit par exemple dans les documents US 10,351,249 et CN106628195. IT PV20 130 003 A1 divulgue un système d'éjection de parachute pour un drone. CN 109 436 341 A divulgue également un système d'éjection de parachute pour un drone. CN 208 868 301 U divulgue un dispositif intelligent de déclenchement de parachute pour un véhicule aérien sans pilote.

Dans ces systèmes, le bras comporte communément une extrémité pourvue d'une pointe orientée en direction d'une cartouche de gaz solidaire du corps dans lequel il est logé. Ainsi, son activation par le dispositif de commande a pour effet de le propulser vers la cartouche de gaz jusqu'à la percer, et finalement permettre au gaz destiné au déploiement d'une toile de parachute de s'échapper.

Il a cependant été observé que du point du vue pratique les solutions exploitées à l'heure actuelle présentent un certain nombre d'inconvénients, liés notamment à une mise en oeuvre au moyen d'un moteur dont la fiabilité n'est pas garantie, ou à une structure parfois complexe, lourde, et fragile.

Le but de la présente invention est de proposer une solution permettant de pallier les différents problèmes identifiés.

En d'autres termes, le but de la présente invention est de fournir une solution alternative à celles connues actuellement, permettant plus particulièrement de s'affranchir du recours à un servomoteur ou d'un moteur réducteur pour activer le bras, de sorte à conduire à un ensemble allégé, et dont les performances en termes d'efficacité, de longévité et de coût sont notablement améliorées.

A cet effet, la présente invention propose un ensemble du genre indiqué en préambule, caractérisé en ce que le dispositif de commande comporte un fil, solidaire dudit corps et dudit organe de retenue, réalisé en un matériau métallique à mémoire de forme adapté pour se rétracter sous l'effet d'une élévation de température et subséquemment, à provoquer le déplacement de l'organe de retenue vers sa seconde position, ainsi que des moyens adaptés pour chauffer au moins temporairement ledit fil, ledit corps présentant une face supérieure, une face inférieure, une face antérieure comportant l'ouverture d'entrée et une face postérieure comportant l'ouverture de sortie du passage traversant, tandis que l'organe de retenue comporte une face convexe et une face concave prolongée par au moins une tige munie d'un crochet, et est monté mobile en translation le long de la face antérieure du corps entre une position dans laquelle le crochet s'étend au moins partiellement devant l'ouverture d'entrée du passage traversant et une position dans laquelle le crochet est en retrait par rapport à l'ouverture d'entrée.

Par ailleurs, selon le cas, l'ensemble selon l'invention peut également présenter l'une ou plusieurs des caractéristiques suivantes :
- la face convexe de l'organe de retenue est pourvue d'une rainure longitudinale dans laquelle est logé un tronçon intermédiaire du fil en matériau à mémoire de forme dont les extrémités sont reliées à des bornes électriques fixées sur la face supérieure du corps, tandis que les moyens adaptés pour chauffer au moins temporairement ledit fil sont définis par des moyens adaptés pour appliquer un courant électrique audit fil.
- le fil en matériau à mémoire de forme est tendu autour de deux pions solidaires de la face supérieure du corps.
- le corps est muni d'un fourreau formé en saillie sur sa face antérieure, et dont l'axe s'étend perpendiculairement au passage traversant tandis que son entrée se situe à l'aplomb de l'ouverture d'entrée du passage traversant, et que son fond est orienté en direction de la face supérieure du corps, la tige de l'organe de retenue étant alors engagée dans ledit fourreau et étant solidaire d'un ressort de rappel logé en butée contre le fond dudit fourreau.
- le bras est d'allure cylindrique et présente une première extrémité et une seconde extrémité orientées en direction respectivement de l'ouverture d'entrée et de l'ouverture de sortie du passage traversant tandis que sa première extrémité est pourvue d'une gorge dans laquelle le crochet de l'organe de retenue est en prise lorsque ce dernier est placé dans sa position dans laquelle le crochet s'étend au moins partiellement devant l'ouverture d'entrée du passage traversant.
- le bras présente une première portion, comportant ladite gorge, de diamètre d0, une seconde portion intermédiaire de diamètre d1 supérieur à d0 ainsi qu'une troisième portion de diamètre d2 supérieur à d1, ménageant un épaulement entre la seconde portion et la troisième portion, et est soumis à l'action d'un ressort de rappel logé dans ledit passage traversant entre ledit épaulement et l'ouverture d'entrée dudit passage traversant.
- le diamètre d0 de la première portion et le diamètre d2 de la troisième portion du bras sont ajustés respectivement au diamètre de l'ouverture d'entrée et au diamètre du passage traversant pour permettre un guidage en translation du bras dans ledit passage traversant.
- le bras comporte une pointe orientée en direction de l'ouverture de sortie du passage traversant.

En outre, l'invention concerne également de manière plus spécifique un système de déploiement d'un parachute pour drone comportant un ensemble conforme à celui décrit ci-dessus et une cartouche de gaz sous pression ou une charge pyrotechnique.

D'autres caractéristiques et avantages de l'invention ressortiront de la description détaillée qui va suivre, qui se rapporte à des exemples particuliers de réalisation d'ensembles et de systèmes selon l'invention, qui ne doivent cependant pas être considérés comme limitatifs de l'invention.

La compréhension de cette description sera facilitée en se référant aux figures suivantes :
[Fig.1] est une vue en perspective d'un système de déploiement d'un parachute pour drone comportant un ensemble selon l'invention et une cartouche de gaz sous pression,
[Fig.2] représente une vue éclatée du système de la figure 1,
[Fig.3] représente une vue en coupe longitudinale du système de la figure 1, dans la position inactive du bras,
[Fig.4] représente une vue en coupe longitudinale du système de la figure 1, dans la position active du bras,
Fig.5] est une vue en coupe longitudinale d'un système de déploiement d'un parachute pour drone comportant un ensemble selon l'invention et une charge pyrotechnique, et
[Fig. 6] est une vue en perspective d'un système de largage d'une charge comportant un ensemble selon l'invention.

Tel qu'indiqué ci-dessus, la présente invention a pour objet un ensemble 100, 101 comportant un bras 4, monté mobile en translation entre une ouverture d'entrée 10 et une ouverture de sortie 11 d'un passage traversant 12 d'un corps 1, et un dispositif de commande du bras 4 comportant un organe de retenue 2 du bras 4, solidaire du corps 1.

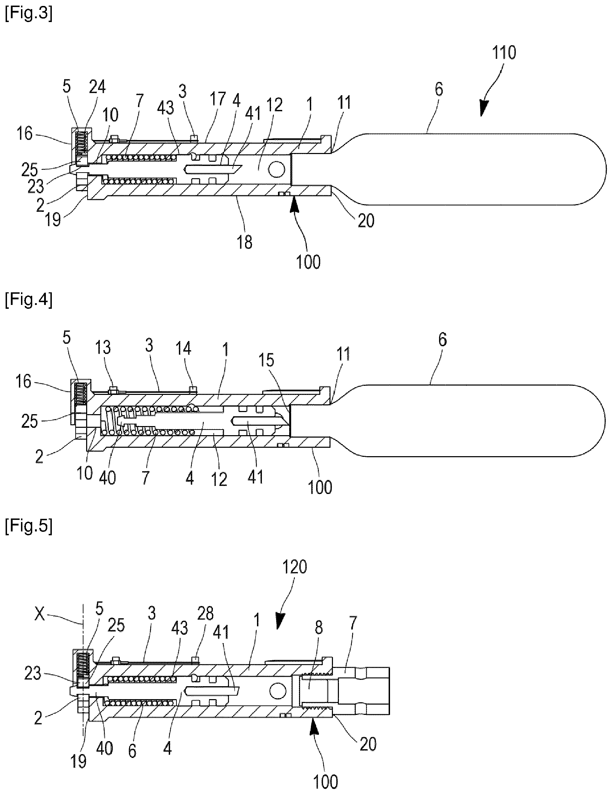

De manière classique, l'organe de retenue 2 est conçu apte à adopter une première position (cf. fig. 3, fig. 5 et fig. 6) dans laquelle il agit sur le bras 4 et le maintient dans une position inactive éloignée de l'ouverture de sortie 11 et une seconde position (cf. fig. 4) dans laquelle il libère le bras 4.

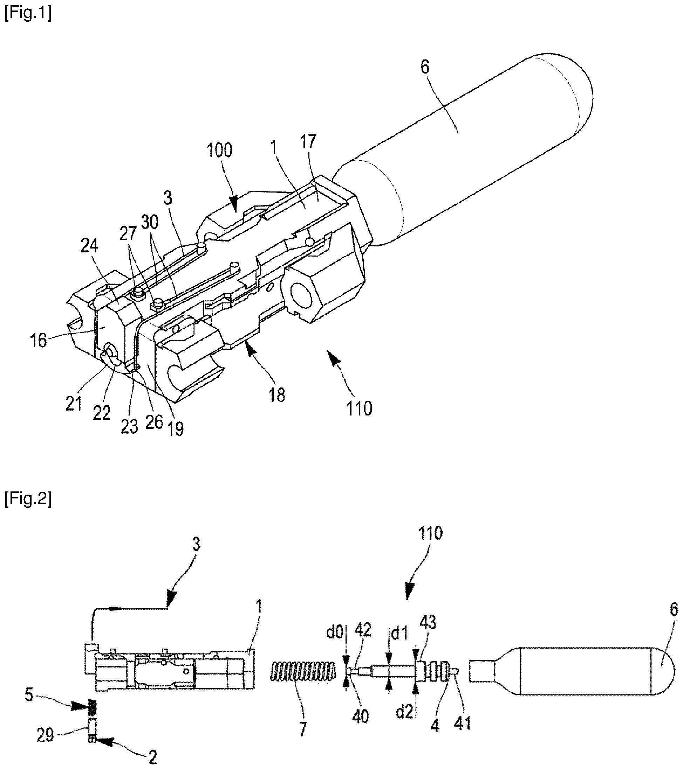

Dans la variante de réalisation illustrée aux figures 1 à 4, un ensemble 100 selon l'invention est mis en oeuvre dans un système 110 de déploiement d'un parachute pour drone, dans lequel le corps 1 est solidaire d'une cartouche 6 de gaz carbonique sous pression.

La figure 5 illustre un système 120 de déploiement d'un parachute pour drone équivalent, formé d'un ensemble 100 identique à celui des figures 1 à 4 et d'une amorce pyrotechnique 8 ainsi que d'un adaptateur 7 pour cette amorce.

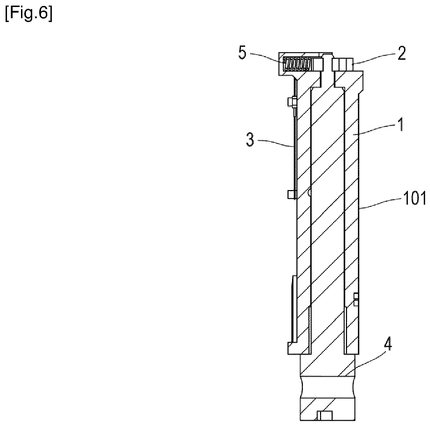

L'ensemble 110 illustré à la figure 6 peut, quant à lui, être mis en oeuvre par exemple dans le cadre du simple largage de charges fixées au bras 4, comme il sera décrit plus loin.

En référence aux figures 1 à 5, le corps 1 de l'ensemble 100 présente une face supérieure 17, pourvue de deux bornes électriques 27 et de deux pions 28, une face inférieure 18, une face antérieure 19 comportant l'ouverture d'entrée 10 et une face postérieure 20 sur laquelle débouche l'ouverture de sortie 11 du passage traversant 12. Le corps 1 comporte par ailleurs un fourreau 16, formé en saillie sur sa face antérieure 19, d'axe X perpendiculaire au passage traversant 12, et dont l'entrée 23 se situe à l'aplomb de l'ouverture d'entrée 10 du passage traversant 12 tandis que le fond 24 est orienté en direction de la face supérieure 17 du corps 1.

L'organe de retenue 2, quant à lui, comporte une face convexe 21 et une face concave 22 (cf. fig. 1) depuis laquelle s'étend au moins une tige 29 munie d'un crochet 25 (cf. fig. 2, fig. 3, et fig. 5). Tel qu'illustré, cette tige 29 est engagée dans le fourreau 16 et est solidaire d'un ressort de rappel 5 logé en butée contre le fond 24 de ce dernier. L'organe de retenue 2 est ainsi monté mobile en translation dans le fourreau 16, le long de la face antérieure 19 du corps 1, entre une position dans laquelle le crochet 25 s'étend hors du fourreau 16, au moins partiellement devant l'ouverture d'entrée 10 du passage traversant 12 (cf. fig. 3) et une position dans laquelle le crochet 25 est en retrait par rapport à l'ouverture d'entrée 10 (cf. fig. 4).

D'autre part, le bras 4 que comporte l'ensemble 100 est d'allure cylindrique et présente une première extrémité 40 ainsi qu'une seconde extrémité 41 en forme de pointe, orientées en direction respectivement de l'ouverture d'entrée 10 et de l'ouverture de sortie 11 du passage traversant 12 du corps 1. Il est à noter que la première extrémité 40 est pourvue d'une gorge 42 dans laquelle le crochet 25 de l'organe de retenue 2 est en prise lorsque ce dernier est placé dans sa position dans laquelle le crochet 25 s'étend au moins partiellement devant l'ouverture d'entrée 10 du passage traversant 12 (cf. fig. 3 et fig. 5). Ainsi, dans cette position de l'organe de retenue 2, le bras 4 est maintenu bloqué dans une position éloignée de l'ouverture de sortie 11 du passage traversant 12 du corps 1 et par conséquent éloignée de la cartouche de gaz 6 ou de l'amorce pyrotechnique 8.

Par ailleurs, la face externe convexe 21 de l'organe de retenue 2 est pourvue d'une rainure longitudinale 26, dans laquelle est logé un tronçon intermédiaire d'un fil 3, tendu autour des deux pions 28 solidaires de la face supérieure 17 du corps 1, et dont les extrémités 30 sont reliées aux bornes électriques 27. Conformément à l'invention, le fil 3 est réalisé en un matériau métallique à mémoire de forme, tel que notamment du Nitinol, adapté pour se rétracter sous l'effet d'une élévation de température et subséquemment, à provoquer le déplacement de l'organe de retenue 2 vers sa position dans laquelle le crochet 23 est en retrait par rapport à l'ouverture d'entrée 10 du passage traversant 12 et ne peut pas s'engager dans la gorge 42 du bras 4. Il est à noter que dans les exemples illustrés, l'ensemble 100, 101 est équipé de moyens (non illustrés) adaptés pour appliquer au moins temporairement au fil 3, au travers des bornes électriques 27, un courant électrique d'intensité appropriée pour aboutir à l'élévation de température recherchée.

Toujours en référence aux figures, dans les exemples illustrés, le bras 4 présente une première portion, de diamètre d0, comportant la gorge 42, une seconde portion intermédiaire de diamètre d1 supérieur à d0 ainsi qu'une troisième portion de diamètre d2 supérieur à d1, ménageant un épaulement 43 entre la portion intermédiaire et la seconde portion. Le bras 4 est par ailleurs soumis à l'action d'un ressort 7 logé dans le passage traversant 12 entre l'épaulement 43 et la face antérieure 19 du corps 1 et qui se trouve dans un état contraint lorsque l'organe de retenue 2 est placé dans sa position dans laquelle le crochet 25 est en prise dans la gorge 42 du bras 4.

Il convient en outre de noter que le diamètre d0 de la première portion et le diamètre d2 de la troisième portion du bras 4 sont avantageusement ajustés respectivement au diamètre de l'ouverture d'entrée 10 et au diamètre du passage traversant 12 pour permettre un guidage en translation du bras 4 dans le passage traversant 12 lorsqu'il est libéré par l'organe de retenue 2 et propulsé en direction de l'ouverture de sortie 11 et par conséquent de la cartouche de gaz 6 ou l'amorce pyrotechnique 8.

Grâce à la structure qui vient d'être décrite, lorsqu'il est mis en oeuvre dans un système de déploiement de parachute pour drones 110, 120, l'ensemble 100 selon l'invention fonctionne de la manière suivante :
- au temps t0, le bras 4 est retenu dans une position éloignée de l'ouverture de sortie 11 du passage 12 du corps 1, grâce à l'action de l'organe de retenue 2 dont le crochet 25 est en prise dans sa gorge 42 située immédiatement sous l'entrée 23 du fourreau 16. Dans cette position, le fil 3 en matériau à mémoire de forme présente une longueur 10, le ressort 5 est au repos et le ressort 7 est dans un état précontraint, comprimé entre l'épaulement 43 et la face antérieure 19 du corps 1,
- à un temps t, nécessitant le déploiement d'un parachute, le fil 3 subit une augmentation temporaire de sa température au travers d'un courant électrique appliqué via les bornes électriques 27. Le fil 3 se rétracte et adopte une longueur l1 inférieure à l0 Il agit alors sur l'organe de retenue 2 dont il provoque un déplacement en translation vers sa position dans laquelle le crochet 25 sort de la gorge 42 du bras 4. Le ressort 7 se détend, et par son action sur l'épaulement 43 du bras 4 propulse celui-ci en direction de l'ouverture de sortie 11 du passage traversant 12 jusqu'à ce que la pointe 43 percute la cartouche de gaz 6 ou l'amorce pyrotechnique 7,
- à un temps t1, après retrait de la cartouche de gaz 6 ou de l'amorce pyrotechnique usagée, l'ensemble 100 peut être réarmé pour une nouvelle mise en oeuvre d'un système 110, 120. A cet effet, au moyen d'un outil approprié on repousse le bras 4 en direction de l'ouverture d'entrée 10, jusqu'à placer la gorge 42 sous le fourreau 16. La forme biseautée de la première extrémité 40 du bras 4 permet de déplacer l'organe de retenue 2 en direction du fond 24 du fourreau 16. Le ressort de rappel 5 vient ensuite forcer l'organe de retenue 2 dans la gorge 42 du bras 4, maintenant celui-ci dans sa position éloignée de l'ouverture de sortie 11 du corps 1. Enfin, le corps 1 peut à nouveau recevoir une cartouche de gaz ou une amorce pyrotechnique intacte.

Tel qu'indiqué ci-dessus, la présente invention concerne également un ensemble 110 du type illustré à la figure 6 et qui se distingue de l'ensemble 100 en ce que son bras 4 est dépourvu de l'épaulement 43 et ne comporte pas de pointe à son extrémité 41 et en ce qu'il ne comporte pas de ressort 7. Un tel ensemble 110 peut être mis en oeuvre par exemple dans le cadre du simple largage au sol de charges fixées au bras 4, celui-ci tombant par gravité après sa libération par l'organe de retenue 2, et entraînant dans sa chute toute éventuelle charge qui y aurait été préalablement accrochée.

## Revendications

1. Ensemble (100, 101) comportant un bras (4), monté mobile en translation entre une ouverture d'entrée (10) et une ouverture de sortie (11) d'un passage traversant (12) d'un corps (1), et un dispositif de commande dudit bras (4) comportant un organe de retenue (2) solidaire dudit corps (1) et conçu apte à adopter une première position dans laquelle il agit sur ledit bras 4) et le maintient dans une position inactive éloignée de l'ouverture de sortie (11) et une seconde position dans laquelle il libère le bras (4), **caractérisé en ce que** le dispositif de commande comporte un fil (3), solidaire dudit corps (1) et dudit organe de retenue (2), réalisé en un matériau métallique à mémoire de forme adapté pour se rétracter sous l'effet d'une élévation de température et subséquemment, à provoquer le déplacement de l'organe de retenue (2) vers sa seconde position, ainsi que des moyens adaptés pour chauffer au moins temporairement ledit fil (3), ledit corps (1) présentant une face supérieure (17), une face inférieure (18), une face antérieure (19) comportant l'ouverture d'entrée (10) et une face postérieure (20) comportant l'ouverture de sortie (11) du passage traversant (12), tandis que l'organe de retenue (2) comporte une face convexe (21) et une face concave (22) prolongée par au moins une tige (29) munie d'un crochet (25), et est monté mobile en translation le long de la face antérieure (19) du corps (1) entre une position dans laquelle le crochet (25) s'étend au moins partiellement devant l'ouverture d'entrée (10) du passage traversant (12) et une position dans laquelle le crochet (25) est en retrait par rapport à l'ouverture d'entrée (10).

2. Ensemble (10, 11) selon la revendication 1, **caractérisé en ce que** la face convexe (21) de l'organe de retenue (2) est pourvue d'une rainure longitudinale (26) dans laquelle est logé un tronçon intermédiaire du fil (3) en matériau à mémoire de forme dont les extrémités (30) sont reliées à des bornes électriques (27) fixées sur la face supérieure (17) du corps (1), et **en ce que** les moyens adaptés pour chauffer au moins temporairement ledit fil (3) sont définis par des moyens adaptés pour appliquer un courant électrique audit fil (3).

3. Ensemble (100, 101) selon la revendication 2, **caractérisé en ce que** le fil (3) en matériau à mémoire de forme est tendu autour de deux pions (28) solidaires de la face supérieure (17) du corps (1).

4. Ensemble (100, 101) selon l'une quelconque des revendications précédentes, **caractérisé en ce que** le corps (1) est muni d'un fourreau (16) formé en saillie sur sa face antérieure (19), de manière telle que son axe X s'étende perpendiculairement au passage traversant (12) et que son entrée (23) se situe à l'aplomb de l'ouverture d'entrée (10) du passage traversant (12) tandis que son fond (24) est orienté en direction de la face supérieure (17) du corps (1), et **en ce que** la tige (29) (de l'organe de retenue (2) est engagée dans ledit fourreau (16) et est solidaire d'un ressort de rappel (5) logé en butée contre le fond (24) dudit fourreau (16).

5. Ensemble (100, 101) selon l'une quelconque des revendications précédentes, **caractérisé en ce que** le bras (4) est d'allure cylindrique et présente une première extrémité (40) et une seconde extrémité (41) orientées en direction respectivement de l'ouverture d'entrée (10) et de l'ouverture de sortie (11) du passage traversant (12) et **en ce que** sa première extrémité (40) est pourvue d'une gorge (42) dans laquelle le crochet (25) de l'organe de retenue (2) est en prise lorsque ce dernier est placé dans sa position dans laquelle le crochet (25) s'étend au moins partiellement devant l'ouverture d'entrée (10) du passage traversant (12).

6. Ensemble (100) selon la revendication 5, **caractérisé en ce que** le bras (4) présente une première portion, comportant ladite gorge (42), de diamètre d0, une seconde portion intermédiaire de diamètre d1 supérieur à d0 ainsi qu'une troisième portion de diamètre d2 supérieur à d1, ménageant un épaulement (43) entre la seconde portion et la troisième portion, et **en ce qu'**il est soumis à l'action d'un ressort de rappel (7) logé dans ledit passage traversant (12) entre ledit épaulement (43) et l'ouverture d'entrée (10) dudit passage traversant (12).

7. Ensemble (100) selon la revendication 6, **caractérisé en ce que** le diamètre d0 de la première portion et le diamètre d2 de la troisième portion du bras (4) sont ajustés respectivement au diamètre de l'ouverture d'entrée (10) et au diamètre du passage traversant (12) pour permettre un guidage en translation du bras (4) dans ledit passage traversant (12).

8. Ensemble (100) selon l'une quelconque des revendications précédentes, **caractérisé en ce que** ledit bras (4) comporte une pointe orientée en direction de l'ouverture de sortie (11) du passage traversant (12).

9. Système (110, 120) de déploiement d'un parachute pour drone comportant un ensemble (100, 101) selon l'une quelconque des revendications précédentes et une cartouche (6) de gaz sous pression ou une charge pyrotechnique (7).

## Patentansprüche

1. Baugruppe (100, 101), umfassend einen Arm (4), der translatorisch bewegbar zwischen einer Eingangsöffnung (10) und einer Ausgangsöffnung (11) einer durchgehenden Passage (12) eines Körpers (1) montiert ist, und eine Steuervorrichtung des Arms (4), umfassend ein Halteorgan (2), das fest mit dem Körper (1) verbunden und geeignet konzipiert ist, um eine erste Position, in der es auf den Arm (4) einwirkt und ihn in einer inaktiven Position entfernt von der Ausgangsöffnung (11) hält, und eine zweite Position, in der es den Arm (4) freigibt, einzunehmen, **dadurch gekennzeichnet, dass** die Steuervorrichtung einen Draht (3) umfasst, der fest mit dem Körper (1) und dem Halteorgan (2) verbunden ist und der aus einem metallischen Formgedächtnismaterial realisiert ist, das angepasst ist, um sich unter der Einwirkung eines Temperaturanstiegs zusammenzuziehen und demzufolge die Verlagerung des Halteorgans (2) zu seiner zweiten Position zu bewirken, sowie Einrichtungen, die angepasst sind, um den Draht (3) mindestens vorübergehend zu erwärmen, wobei der Körper (1) eine obere Fläche (17), eine untere Fläche (18), eine vordere Fläche (19), umfassend die Eingangsöffnung (10), und eine hintere Fläche (20), umfassend die Ausgangsöffnung (11) der durchgehenden Passage (12) aufweist, während das Halteorgan (2) eine konvexe Fläche (21) und eine konkave Fläche (22) umfasst, die durch mindestens einen Schaft (29) verlängert ist, der mit einem Haken (25) versehen ist und translatorisch bewegbar entlang der vorderen Fläche (19) des Körpers (1) zwischen einer Position, in der sich der Haken (25) mindestens teilweise vor der Eingangsöffnung (10) der durchgehenden Passage (12) erstreckt, und einer Position, in der der Haken (25) in Bezug auf die Eingangsöffnung (10) zurückgesetzt ist, montiert ist.

2. Baugruppe (10, 11) nach Anspruch 1, **dadurch gekennzeichnet, dass** die konvexe Fläche (21) des Halteorgans (2) mit einer Längsnut (26) versehen ist, in der ein Zwischenabschnitt des Drahts (3) aus Formgedächtnismaterial aufgenommen ist, dessen Enden (30) mit elektrischen Klemmen (27) verbunden sind, die auf der oberen Fläche (17) des Körpers (1) befestigt sind, und dass die Einrichtungen, die zum mindestens vorübergehenden Erwärmen des Drahts (3) angepasst sind, durch Einrichtungen definiert sind, die angepasst sind, um an den Draht (3) einen elektrischen Strom anzulegen.

3. Baugruppe (100, 101) nach Anspruch 2, **dadurch gekennzeichnet, dass** der Draht (3) aus Formgedächtnismaterial um zwei Stifte (28) gespannt ist, die fest mit der oberen Fläche (17) des Körpers (1) verbunden sind.

4. Baugruppe (100, 101) nach einem der vorstehenden Ansprüche, **dadurch gekennzeichnet, dass** der Körper (1) mit einer Hülse (16) versehen ist, die auf seiner vorderen Fläche (19) vorspringend derart gebildet ist, dass sich ihre X-Achse senkrecht zu der durchgehenden Passage (12) erstreckt, und sich ihr Eingang (23) in der Lotrechten der Eingangsöffnung (10) der durchgehenden Passage (12) befindet, während ihr Boden (24) in Richtung der oberen Fläche (17) des Körpers (1) ausgerichtet ist, und dass der Schaft (29) des Halteorgans (2) in die Hülse (16) eingreift und fest mit einer Rückstellfeder (5) verbunden ist, die im Anschlag gegen den Boden (24) der Hülse (16) aufgenommen ist.

5. Baugruppe (100, 101) nach einem der vorstehenden Ansprüche, **dadurch gekennzeichnet, dass** der Arm (4) zylindrisch ist und ein erstes Ende (40) und ein zweites Ende (41) aufweist, die jeweils in Richtung der Eingangsöffnung (10) und der Ausgangsöffnung (11) der durchgehenden Passage (12) ausgerichtet sind, und dass sein erstes Ende (40) mit einer Hohlkehle (42) versehen ist, in der der Haken (25) des Halteorgans (2) in Eingriff ist, wenn dieses Letztere in seiner Position platziert ist, in der sich der Haken (25) mindestens teilweise vor der Eingangsöffnung (10) der durchgehenden Passage (12) erstreckt.

6. Baugruppe (100) nach Anspruch 5, **dadurch gekennzeichnet, dass** der Arm (4) einen ersten Abschnitt aufweist, umfassend die Hohlkehle (42) mit Durchmesser d0, einen zweiten Zwischenabschnitt mit Durchmesser d1, der größer ist als d0, sowie einen dritten Abschnitt mit Durchmesser d2, der größer ist als d1, indem eine Schulter (43) zwischen dem zweiten Abschnitt und dem dritten Abschnitt ausgebildet ist, und dass sie der Wirkung einer Rückstellfeder (7) unterliegt, die in der durchgehenden Passage (12) zwischen der Schulter (43) und der Eingangsöffnung (10) der durchgehenden Passage (12) aufgenommen ist.

7. Baugruppe (100) nach Anspruch 6, **dadurch gekennzeichnet, dass** der Durchmesser d0 des ersten Abschnitts und der Durchmesser d2 des dritten Abschnitts des Arms (4) jeweils an den Durchmesser der Eingangsöffnung (10) und an den Durchmesser der durchgehenden Passage (12) angeglichen sind, um eine translatorische Führung des Arms (4) in der durchgehenden Passage (12) zuzulassen.

8. Baugruppe (100) nach einem der vorstehenden Ansprüche, **dadurch gekennzeichnet, dass** der Arm (4) eine Spitze umfasst, die in Richtung der Ausgangsöffnung (11) der durchgehenden Passage (12) ausgerichtet ist.

9. System (110, 120) zum Entfalten eines Fallschirms für eine Drohne, umfassend eine Baugruppe (100, 101) nach einem der vorstehenden Ansprüche und eine Druckgaskartusche (6) oder eine pyrotechnische Ladung (7).

## Claims

1. An assembly (100, 101) comprising an arm (4), mounted movable in translation between an inlet opening (10) and an outlet opening (11) of a through passage (12) of a body (1), and a control device for controlling said arm (4) comprising a retaining member (2) secured to said body (1) and designed to adopt a first position wherein it acts on said arm 4) and holds it in an inactive position away from the outlet opening (11) and a second position wherein it releases the arm (4), **characterized in that** the control device comprises a wire (3), secured to said body (1) and said retaining member (2), made of a metal material with a shape suitable for retracting under the effect of a temperature rise and subsequently, to cause the movement of the retaining member (2) to its second position, as well as means suitable for at least temporarily heating said wire (3), said body (1) having an upper face (17), a lower face (18), an anterior face (19) comprising the inlet opening (10) and a posterior face (20) comprising the outlet opening (11) of the through passage (12), while the retaining member (2) comprises a convex face (21) and a concave face (22) extended by at least one rod (29) provided with a hook (25), and is mounted movable in translation along the anterior face (19) of body (1) between a position wherein the hook (25) extends at least partially in front of the inlet opening (10) of the through passage (12) and a position wherein the hook (25) is withdrawn relative to the inlet opening (10).

2. The assembly (10, 11) according to claim 1, **characterized in that** the convex face (21) of the retaining member (2) is provided with a longitudinal slot (26) wherein an intermediate segment of the wire (3) made of shape-memory material is housed, the ends (30) of which are connected to electrical terminals (27) attached on the upper face (17) of the body (1), and **in that** the means suitable for at least temporarily heating said wire (3) are defined by means suitable for applying an electric current to said wire (3).

3. The assembly (100, 101) according to claim 2, **characterized in that** the wire (3) made of shape-memory material is tensioned around two pins (28) secured to the upper face (17) of the body (1).

4. The assembly (100, 101) according to any one of the preceding claims, **characterized in that** the body (1) is provided with a sheath (16) formed projecting from its anterior face (19), whereby its axis X extends perpendicularly to the through passage (12) and whereby its inlet (23) is located in line with the inlet opening (10) of the through passage (12) while its bottom (24) is oriented in the direction of the upper face (17) of the body (1), and **in that** the rod (29) (of the retaining member (2) is engaged in said sheath (16) and is secured to a return spring (5) housed in abutment against the bottom (24) of said sheath (16).

5. The assembly (100, 101) according to any one of the preceding claims, **characterized in that** the arm (4) is cylindrical and has a first end (40) and a second end (41) oriented in the direction of the inlet opening (10) and the outlet opening (11), respectively, of the through passage (12), and **in that** its first end (40) is provided with a groove (42) wherein the hook (25) of the retaining member (2) is engaged when the latter is placed in its position wherein the hook (25) extends at least partially in front of the inlet opening (10) of the through passage (12).

6. The assembly (100) according to claim 5, **characterized in that** the arm (4) has a first portion, comprising said groove (42), of diameter d0, a second intermediate portion of diameter d1 greater than d0, as well as a third portion of diameter d2 greater than d1, providing a shoulder (43) between the second portion and the third portion, and **in that** it is subjected to the action of a return spring (7) housed in said through passage (12) between said shoulder (43) and the inlet opening (10) of said through passage (12).

7. The assembly (100) according to claim 6, **characterized in that** the diameter d0 of the first portion and the diameter d2 the third portion of the arm (4) are respectively adjusted to the diameter of the inlet opening (10) and to the diameter of the through passage (12) to allow translational guidance of the arm (4) in said through passage (12).

8. The assembly (100) according to any one of the preceding claims, **characterized in that** said arm (4) comprises a tip oriented toward the outlet opening (11) of the through passage (12).

9. A system (110, 120) for deploying a drone parachute comprising an assembly (100, 101) according to any one of the preceding claims and a pressurized gas cartridge (6) or a pyrotechnic charge (7).
